# EUROPÄISCHE PATENTANMELDUNG

(11) **EP 1 419 811 A1**
(43) Veröffentlichungstag der Anmeldung: **19.05.2004**
(21) Anmeldenummer: 03025856.0
(22) Anmeldetag: 11.11.2003
(51) Int. Cl.: B01J 3/04, A23L 1/22, A23P 1/04, A23K 1/00, A23K 1/16

(54) **Stabile Pflanzenextrakte**

(30) Priorität: 12.11.2002 EP 02025242
(71) Anmelder: Inovia Hutzinger & Partner KEG, 4800 Thalheim (AT)
(72) Erfinder: Hutzinger, Michael, Dr., 4020 Linz (AT)
(74) Vertreter: Landgraf, Elvira, Dipl.-Ing.

(57) **Zusammenfassung**

Die Erfindung betrifft stabile Pflanzenextrakte, Verfahren zu deren Herstellung in mikroverkapselter Form und deren Verwendung.

## Beschreibung

Die Erfindung betrifft stabile Pflanzenextrakte, insbesondere temperaturstabile Pflanzenextrakte.

In der Tiernahrungsmittelindustrie, insbesondere in der Ernährung von Nutzaber auch Haustieren wurden in der Vergangenheit Futterergänzungszusätze auch in Form antibiotischer Zusatzstoffe eingesetzt. Diese Zusatzstoffe sollten insbesondere in der Nutztieremährung eine Leistungssteigerung bewirken, sei es in Bezug auf die Fleischbeschaffenheit bzw. -menge oder die Beschaffenheit oder Menge der verwertbaren Produkte.
Durch die Gefahr von Kreuzresistenzen (nicht nur bei Nutztieren sondern auch bei Haustieren) bzw. die Gefahr und Nebenwirkungen von Rückständen im Fleisch oder den Produkten (Milch, Käse, Eier u. dgl) auf den Endverbraucher ist der Einsatz antibiotischer Mittel als Leistungförderer umstritten und führte zu zahlreichen Verboten des Einsatzes derartiger Mittel.

Als Alternative zu derartigen antibiotischen Leistungssteigerungsmitteln werden seit einiger Zeit auf pflanzlicher Basis hergestellte Futterzusätze ins Auge gefasst, wobei die derzeitigen Erfahrungen und Untersuchungen hinsichtlich Aufnahmefähigkeit, Verwertbarkeit im Verdauungstrakt, Beeinflussung des Immunsystems und dergleichen positiv zu beurteilen sind. Rückstände im Fleisch von Nutztieren und deren Produkten sind für den Menschen unbedenklich.

In der Mischfutterindustrie werden antibiotische Zusatzstoffe für Vormischungen oder Fertigprodukte üblicherweise in Form von Granulaten verwendet, wobeidiese Granulate als Pellets oder Extrudate vorliegen können. Dadurch kann eine bequeme Handhabung, insbesondere Mischbarkeit und relativ exakte Dosierbarkeit in Verbindung mit Trockenfutterzubereitungen und dergleichen erreicht werden.

bei der Verwendung pflanzlicher Zusatzstoffe tritt allerdings das Problem auf, dass viele wirksame phytogene Zusatzstoffe in Form von Ölen, insbesondere ätherischen Ölen vorliegen. Diese Zusatzstoffe verflüchtigen sich unter Temperatureinfluss rasch. Beim Pelletier- bzw. Extrudierprozess kommen hohe Temperaturen, hoher Druck und/oder hohe Scherkräfte zur Wirkung, sodass derartige Zusatzmittel nicht oder nur unter hohen Verlusten verarbeitet werden können.
Ätherische Öle, die im nacheinein auf Pellets oder Extrudate aufgebracht, insbesondere aufgesprüht werden, haften nur unvollständig, insbesondere nur an der Oberfläche der Pellets oder Extrudate, sodass es bei der Lagerung, oder unter Feuchtigkeitseinfluss oder durch Reibung zu einer Entmischung und somit zu einer nicht gleichmäßigen Verteilung im Futtermittel kommt.
Dadurch wird der Einsatz dieser pflanzlichen Zusatzstoffe, vor allem auch aufgrund der Verarbeitungsverluste als unrentabel angesehen.

Zur Stabilisierung flüchtiger Substanzen, wie beispielsweise pflanzlicher Substanzen und ätherischer Öle wird in der Technik das Verfahren der Sprühtrocknung verwendet. Bei diesem Verfahren werden feinste Tröpfchen des zu verarbeitenden Materials in einer o/w Emulsion erzeugt und in einem Heißluftstrom versprüht. Das entstandene Pulver besteht aus eingekapselten Partikeln und ist in getrocknetem zustand gegenüber Verdunstungsverlusten relativ stabil. Mit einem geeigneten Lösungsmittel, beispielsweise Wasser sind die eingekapselten Partikel relativ leicht rückemulgierbar.

Für die Stabilisierung flüchtiger Stoffe, insbesondere flüchtiger Pflanzenbestandteile, wie ätherische Öle und dergleichen sind derartige Verfahren aber ungeeignet, da es aufgrund der bei diesen Verfahren verwendeten Dampfbehandlung zu einem erhöhten Wassergehalt und damit wiederum zu hohen Verdunstungsverlusten kommt.

Aufgabe der Erfindung war es daher, ein Verfahren bereitzustellen, bei dem auch flüchtige Substanzen, wie ätherische Öle und dergleichen in verkapselter Form ohne hohe Verdunstungsverluste stabil hergestellt werden können.

Gegenstand der Erfindung sind daher ein Verfahren zur Herstellung volatiler Substanzen in mikroverkapselter Form, dadurch gekennzeichnet, dass in einem ersten Schritt eine o/w Emulsion hergestellt wird, die Wasser, einen Lösungsvermittler, natürliche Polymere und die zu verkapselnde volatile Substanz enthält, und in einem zweiten Schritt diese Emulsion mittels Sprühtrocknung in ein rieselfähiges Pulver übergeführt wird, wobei die Differenz zwischen Eintritts- und Austrittstemperatur 70 - 100 °C beträgt.

Als Polymere können werden natürliche Polymere oder Polymergemische eingesetzt. So können beispielsweise Stärkehydrolysate, wie Dextrine, modifizierte Stärken, Gummi Arabicum, Alginate, Naturharze, wie Schellack, Wurzelharz, Cellulosederivate, wie Hydroxypropylcellulose, Na-carboxylcellulose, Methylcellulose, Ethylcellulose, tierische und/oder pflanzliche Eiweiße bzw. deren Hydrolysate, wie Gelatine, Collagen, Eiprotein, Weizenprotein, Caseinate, Milcheiweiß, Sojaeiweiß, Erbseneiweiß und dergleichen und/oder deren Mischungen verwendet werden.

Als Lösungsvermittler können ja nach Zusammensetzung des Polymers bzw. Polymergemisches Mineralsäuren, beispielsweise HCl, H₂SO₄, organische Säuren, wie Ameisensäure, Essigsäure, Propionsäure, Buttersäure, Ammoniak oder Alkohole, wie Methanol, Ethanol, Propanol, 2- Propanol und dergleichen eingesetzt werden.

Gegebenenfalls kann die Emulsion natürliche Weichmacher oder Fließmittel enthalten.
Beispielse für derartige Weichmacher sind Wachse, wie Bienenwachs, Candellawachs, Carnaubawachs, Baumwollsaatölwachs, hydrierte Pflanzenöle, Ceresin und dergleichen.

Als Fließmittel können gegebenenfalls amorphe Kieselsäuren, Talkum, Calciumsilikate, Calciumphosphate und dergleichen verwendet werden.

Als flüchtige Substanzen werden beispielsweise natürliche oder naturidente Aromen oder Aromamischungen (Orange, Zitrone, Vanille, Kokos, Pfefferminze, Banane, Erdbeere), natürliche oder naturidente ätherische Öle (Anisöl, Basilikumöl, Cedemholzöl, Citronenöl, Eukalyptusöl, Fenchelöl, Kamillenöl, Kampferöl, Knoblauchöl, Majoranöl, Menthol, Nelkenblütenöl, Pferfferminzöl, Rosmarinöl, Thymianöl, Zimtblätteröl, Zwiebelöl) und dergleichen verwendet, Ferner können als flüchtige Substanzen Botenstoffe, beispielsweise Pheromone, Allomone, Kairomone, wie Sexuallockstoffe von Schmetterlingen, bestehend aus unter anderem aus aliphatischen geradkettigen Alkoholen, deeren Acetate, Aldehyde, Ketone, Kohlenwasserstoffe und Epoxyverbindungen; Pheromone der Käfer bestehend unter anderem aus terpenoiden Verbindungen oder Umwandlungsprodukten von aus der Nahrung stammenden Terpenen, Pheromone der Ameisen, Bienen, Wespen und Hummeln, bestehend unter anderem aus heterocyclischen aromatischen Verbindungen und Terpenderivaten, Fliegenpheromone bestehend unter anderem aus einfach ungesättigten Kohlenwasserstoffen, Spiroverbindungen, heterocyclischen aliphatischen Verbindungen, Termitenpheromone, bestehend unter anderem aus Terpenverbindungen, langkettigen Alkanen und Alkenen, Nitroalkenen, Vinylketonen, Ketoaldehyden und makrocyclischen Diterpenen, Pheromone von Insekten aus anderen Ordnungen, beispielsweise der Blattlaus, bestehend unter anderem aus Farnesen, Pinien und bicyclischen Lactonen, sowie der deutschen Schabe bestehend unter anderem aus aliphatischen und einfach ungesättigten geradkettigen Alkoholen, deren Acetaten und Formiaten, oder Säugetierpheromone bestehend unter anderem aus Steroid- und Thiazaverbindungen, sowie polycyclischen Ethem, verwendet werden.

Der Feststoffgehalt der Emulsion ist von mehreren Parameter abhängig und muss entsprechend angepasst werden. Der Feststoffgehalt der Emulsion ist insbesondere abhängig vom Emulsionsverhalten des Polymers bzw. der Polymermischung, der Viskosität der Emulsion und der Menge und Art der zu verkapselnden flüchtigen Substanz. Ebenso sind die technischen Voraussetzungen des Sprühturms, hinsichtlich der Emulsionszerstäubung, Turmdimension und Trocknungsparameter, zu berücksichtigen. Vorzugsweise liegt der Feststoffgehalt zwischen 20 und 50%, besonders bevorzugt zwischen 35 und 45%.

Zur Herstellung der Emulsionen können handelsübliche Druckhomogenisatoren bzw. Dispergiermaschinen verwendet werden um das entsprechende Tröpfchengrößenspektrum zu erreichen. Das Verfahren kann entweder im kontinuierlich (Inline-Betrieb) oder diskontinuierlich (Chargen- oder Batch-Betrieb) durchgeführt werden.

Die Zerstäubung der Emulsion kann mittels einer schnell rotierenden Scheibe (vorzugsweise 15000 - 22000 UpM) oder einer Einstoff oder Zweistoffdüse erfolgen.
Zur Trocknung der Emulsionspartikel werden die Zuluft- und Ablufttemperaturen so gewählt, dass die Restfeuchtigkeit des getrockneten Produkt unter 2% beträgt. Die Differenz zwischen Eintritts- und Austrittstemperatur beträgt zur Vermeidung von Verdampfungsverlusten der einzukapselnden flüchtigen Stoffe 70 -100° C, vorzugsweise 70 - 90° C.

Die auf diese Weise eingekapselten Produkte sind in Wasser nicht emulgierbar, mechanisch stabil und hitzebeständig. Sie können auf übliche Weise pelletiert, extrudiert oder granuliert werden und werden als Futterzusatzstoffe verwendet.

### Beispiele:

### Beispiel 1:

Eine Lösung aus Wasser (93,4 - 94,7Gew%), Natrium-Kaseinat (4 Gew%) und Natriumstearat (0-1,3 Gew%) wird in einem doppelmanteligem Mischbehälter mit schnelllaufendem Rührwerk mit Oreganoöl versetzt und bei 20 - 25 °C bei 1000 - 300 UpM vermischt. Die Mischung wird im Umlaufverfahren bei 11000 UpM dispergiert (Ultraturrax-Inline Rotos-Stator Typ IKA) und solange emulgiert bis eine durchschnittliche Tröpfchengröße von < 1 µm erreicht wird. Nach Zugabe von CaOH (3,5-4 Gew%) wird Essigsäure (50% in H₂O) bie 300 - 500 UpM über einen Zeitraum von 25 min kontinuierlich zudosiert, bis sich der pH-Wert der Mischung auf 4,7 eingestellt hat.
Das Gemisch wird für 3 - 5 h bei 10 -15°C stehen gelassen, wobei es zu einer Sedimentation der eingekapselten Oreganoölpartikel kommt.
Durch Abpumpen der überstehenden wässrigen Phase entsteht eine Suspension mit einem Feststoffgehalt von 20 - 30 %, welche sprühgetrocknet (Düsenzerstäubung, T _{zu}: 200 °C, T_{ab}: 100 °C) wird.
Man erhält ein frei fließendes Pulver mit einem mittleren Teilchendurchmesser von 200 µm bei einer Schüttdichte von 280 g/l. Der Gehalt an Oreganoöl im Feststoff beträgt 24 - 29 %.

### Beispiel 2:

Eine Lösung bestehend aus Wasser (60 Gew%), modifizierter Stärke (24 Gew% und Nelkenöl (16 Gew%) wird in einem Mischtank mit Schnelllaufendem Rührwerk bei 20 - 25°C bei 1000 - 3000 UpM vermischt. Die Mischung wird mittels Druckhomogenisation im Umlaufverfahren emulgiert bis eine durchschnittliche Tröpfchengröße < 1µm erreicht wird. Eine in einem separaten Behälter hergestellte Wachsemulsion bestehend aus Wasser (73 Gew%), einem hydrierten Pflanzenfett (24 Gew%) und Ascorbylpalmitat (3 Gew%) wird bei 60 - 80 °C in die Nelkenölemulsion eingerührt und das Gemisch in einem Wendelrührer bei 100 - 300 UpM 15 min durchmischt.
Nach Sprühtrocknung (Scheibenzerstäubung T _{zu}: 190 °C, T_{ab}: 90°C) des Gemisches entsteht ein feines leicht stockendes Pulver mit einem mittleren Teilchendurchmesser von 80 µm und einer Schüttdichte von 320g/l. der Gehalt an Nelkenöl im Feststoff beträgt 33 - 35 %.
Durch Einmischen von 0,1 - 1% Kieselsäure (Aerosil, Degussa), Calciumphosphat, Magnesiumstearat oder anderen handelsüblichen Trennmitteln kann das Fließverhalten des sprühgetrockneten Nelkenöls verbessert werden.

### Beispiel 3:

Eine Lösung aus Wasser (69 Gew%, Gelatine (4mPas, 10 %/ 30°C) (15 Gew%9, Weizenprotein (7 Gew%), Propionsäure (3 Gew%) und Thymianöl (6 Gew%) wird ein einem doppelmanteligen Mischbehälter mit schnelllaufendem Rührwerk (100 - 3000 UpM) bei 35 - 40 °C vermischt. Die Mischung wird mittels Druckhomogenisation im Umlaufverfahren emulgiert bis eine durchschnittliche Tröpfchengröße von < 1µm erreicht wird. Sprühtrocknung der Emulsion mit Dosierzerstäubung (T _{zu}: 190 °C, T_{ab}: 100°C) ergibt ein rieselfähiges Pulver mit einem mittleren Teilchendurchmesser von 150 µm bei einem Schüttgewicht von 294 g/l. Der Thymianölgehalt im Feststoff beträgt 20 - 21 %.

## Patentansprüche

1. Verfahren zur Herstellung volatiler Substanzen in mikroverkapselter Form, **dadurch gekennzeichnet, dass** in einem ersten Schritt eine o/w Emulsion hergestellt wird, die Wasser, einen Lösungsvermittler, natürliche Polymere und die zu verkapselnde volatile Substanz enthält, und in einem zweiten Schritt diese Emulsion mittels Sprühtrocknung in ein rieselfähiges Pulver übergeführt wird, wobei die Differenz zwischen Eintritts- und Austrittstemperatur 70 - 100 °C beträgt.

2. Verfahren nach Anspruch 1, **dadurch gekennzeichnet, dass** als flüchtige Substanzen ätherische Öle verwendet werden

3. Verfahren nach einem der Ansprüche 1 oder 2, **dadurch gekennzeichnet, dass** als natürliche Polymere Stärkehydrolysate, wie Dextrine, modifizierte Stärken, Gummi Arabicum, Alginate, Naturharze, wie Schellack, Wurzelharz, Cellulosederivate, wie Hydroxypropylcellulose, Na-carboxylcellulose, Methylcellulose, Ethylcellulose, tierische und/oder pflanzliche Eiweiße bzw. deren Hydrolysate, wie Gelatine, Collagen, Eiprotein, Weizenprotein, Caseinate, Milcheiweiß, Sojaeiweiß, Erbseneiweiß und dergleichen und/oder deren Mischungen verwendet werden.

4. Verfahren nach einem der Ansprüche 1 bis 3, **dadurch gekennzeichnet, dass** als Lösungsvermittler Mineralsäuren, beispielsweise HCl, H₂SO₄, organische Säuren, wie Ameisensäure, Essigsäure, Propionsäure, Buttersäure, Ammoniak oder Alkohole, wie Methanol, Ethanol, Propanol, 2- Propanol und dergleichen eingesetzt werden.

5. Verfahren nach einem der Ansprüche 1 bis 4, **dadurch gekennzeichnet, dass** zur Herstellung der Emulsion Weichmacher und/oder Fließmittel zugesetzt werden.

6. Verfahren nach einem der Ansprüche 1 bis 5, **dadurch gekennzeichnet, dass** der Feststoffgehalt der Emulsion 20 - 50 % beträgt.

7. Verfahren nach einem der Ansprüche 1 bis 6, **dadurch gekennzeichnet, dass** die Sprühtrocknung durch Zerstäuben mittels einer schnell rotierenden Scheibe erfolgt.

8. Verfahren nach einem der Ansprüche 1 bis 6, **dadurch gekennzeichnet, dass** die Sprühtrocknung durch Zerstäuben mit einer Einstoff- oder Zweistoffdüse erfolgt.

9. Eingekapselte flüchtige Stoffe hergestellt nach einem Verfahren gemäß den Ansprüche 1 bis 8.

10. Verwendung der eingekapselten flüchtigen Stoffe nach Anspruch 9, gegebenenfalls nach Pelletieren, Extrudieren oder Granulieren als Zusatzstoffe in der Futtermittelindustrie.
